# EUROPEAN PATENT APPLICATION

(11) **EP 3 706 256 A1**
(43) Date of publication of application: **09.09.2020**
(21) Application number: 18874331.4
(22) Date of filing: 21.06.2018
(51) Int. Cl.: H01R 13/639, B60L 50/50

(54) **CHARGING GUN LOCKING SYSTEM, VEHICLE BODY ASSEMBLY AND CHARGING GUN**

(30) Priority: 30.10.2017 CN 201711031635
(71) Applicant: NIO Nextev Limited, Central, Hong Kong (HK)
(72) Inventor: HAO, Tianlei, Central Hong Kong (CN)
(74) Representative: Vossius & Partner Patentanwälte Rechtsanwälte mbB
(86) International application number: PCT/CN2018/092214
(87) International publication number: WO 2019/085514

(57) **Abstract**

Disclosed are a charging gun locking system, a vehicle body assembly (100) and a charging gun (200), wherein the charging gun locking system comprises: the vehicle body assembly (100), comprising: an electronic locking mechanism (110) configured to be movable relative to the vehicle body assembly (100); a controller (400) electrically connected to the electronic locking mechanism (110) and a control circuit (A2); and the charging gun (200) detachably attached to the vehicle body assembly (100) and comprising: a button assembly (230) comprising a first button (231) associated with the control circuit (A2), and a mechanical locking mechanism (210) with one end provided with a mechanical locking portion (220) and the other end associated with the button assembly (230); wherein the electronic locking mechanism (110) is configured to have a first position in which the electronic locking mechanism (110) locks the mechanical locking portion (220) and a second position in which the electronic locking mechanism (110) unlocks the mechanical locking portion (220). The charging gun locking system, the vehicle body assembly (100) and the charging gun (200) described above enable a user to release the locking between a vehicle and the charging gun (200) only by operating on the charging gun side, thereby simplifying the operation.

## Description

### Technical Field

The invention relates to a charging gun locking and unlocking device, and more particularly to a charging gun locking system. The invention also relates to a vehicle body assembly and a charging gun.

### Background Art

It is known that a charging gun is often provided with an S button. The S button is associated with a mechanical locking mechanism and a CC signal. When the S button is depressed, the mechanical locking mechanism will be disconnected and the CC signal will also be cut off. That is, after a user depresses the S button, the charging gun can be pulled out of a vehicle.

However, when a charging current of an electric vehicle is greater than 16 A, an electronic locking mechanism needs to be arranged in the charging system. The locking mechanism is located at the vehicle end and controlled by the vehicle. In this case, the user needs to first operate at the vehicle end to release the electronic locking mechanism, and then depress the S button on the charging gun to pull out the charging gun.

In addition, according to the provisions of national standards, the electronic locking mechanism at the vehicle end is provided with a lock bolt, and the lock bolt is configured to clamp the mechanical locking mechanism. In this way, when the charging current of the electric vehicle is greater than 16 A, the user needs to first release the electronic locking mechanism at the vehicle end, and then depress the S button on the charging gun to pull out the charging gun. Such an operation is complicated and brings about a bad user experience.

Therefore, there is a continuous need for improved charging gun unlocking mechanisms, vehicle body assemblies, and charging guns.

### Summary of the Invention

An objective of the invention is to provide a charging gun locking system for a charging gun, which enables a user to release locking between a vehicle and a charging gun only by operating on the charging gun side. Another objective of the invention is to provide a vehicle body assembly for the charging gun locking system and a charging gun for the charging gun locking system.

The objectives of the invention are achieved by the following technical solutions:
a charging gun locking system, comprising:
   a vehicle body assembly, comprising:
   an electronic locking mechanism configured to be movable relative to the vehicle body assembly;
   a controller electrically connected to the electronic locking mechanism and a control circuit; and
a charging gun detachably attached to the vehicle body assembly and comprising:
   a button assembly comprising a first button associated with the control circuit, and
   a mechanical locking mechanism with one end provided with a mechanical locking portion and the other end associated with the button assembly;
wherein the electronic locking mechanism is configured to have a first position in which the electronic locking mechanism locks the mechanical locking portion and a second position in which the electronic locking mechanism unlocks the mechanical locking portion.

Optionally, the first button is configured to emit a first signal when depressed.

Optionally, the first button is configured to cut off a CC signal when depressed.

Optionally, the controller is configured to: perform operator permission determination when the first signal has been sensed, and move the electronic locking mechanism from the first position to the second position if it is determined that an operator has an operation permission; and keep the electronic locking mechanism in the first position if it is determined that the operator does not have the operation permission.

Optionally, the controller is configured to perform the operator permission determination based on: whether a vehicle key is inserted into a keyhole, whether a vehicle is locked and/or whether a wireless key is near the vehicle.

Optionally, the mechanical locking mechanism is rotatably attached to a spindle, and the button assembly further comprises a second button configured to rotate the mechanical locking mechanism about the spindle when depressed.

Optionally, the first button is disposed above the second button.

Optionally, the button assembly further comprises an S button disposed on an outer surface of the charging gun, and the S button is disposed above the first button.

Optionally, the vehicle body assembly further comprises a lock bolt configured to cooperate with the electronic locking mechanism in the first position to lock the mechanical locking portion.

Optionally, the charging gun and the vehicle body assembly are each provided with a charging circuit through which power is supplied to a vehicle-mounted battery when the charging gun is attached to the vehicle body assembly.

A vehicle body assembly used for installing a charging gun is provided, the vehicle body assembly comprising:
an electronic locking mechanism configured to be movable relative to the vehicle body assembly; and
a controller electrically connected to the electronic locking mechanism and a control circuit;
wherein the electronic locking mechanism is configured to have a first position in which the electronic locking mechanism locks the mechanical locking portion of the charging gun and a second position in which the electronic locking mechanism unlocks the mechanical locking portion.

Optionally, the controller is configured to: perform operator permission determination when the first signal has been sensed, and move the electronic locking mechanism from the first position to the second position if it is determined that an operator has an operation permission; and keep the electronic locking mechanism in the first position if it is determined that the operator does not have the operation permission.

Optionally, the controller is configured to perform the operator permission determination based on: whether a vehicle key is inserted into a keyhole, whether a vehicle is locked and/or whether a wireless key is near the vehicle.

Optionally, the vehicle body assembly further comprises a lock bolt configured to cooperate with the electronic locking mechanism in the first position to lock the mechanical locking portion.

Optionally, the charging gun and the vehicle body assembly are each provided with a charging circuit through which power is supplied to a vehicle-mounted battery when the charging gun is attached to the vehicle body assembly.

A charging gun detachably attached to the vehicle body assembly is provided, the charging gun comprising:
a button assembly comprising a first button associated with a control circuit; and
a mechanical locking mechanism with one end provided with a mechanical locking portion and the other end associated with the button assembly; and
wherein the mechanical locking mechanism is configured to be locked by an electronic locking mechanism in the vehicle body assembly, and the electronic locking mechanism is configured to have a first position in which the electronic locking mechanism locks the mechanical locking portion and a second position in which the electronic locking mechanism unlocks the mechanical locking portion.

Optionally, the first button is configured to emit a first signal when depressed.

Optionally, the first button is configured to cut off a CC signal when depressed.

Optionally, the mechanical locking mechanism is rotatably attached to a spindle, and the button assembly further comprises a second button configured to rotate the mechanical locking mechanism about the spindle when depressed.

Optionally, the first button is disposed above the second button.

Optionally, the button assembly further comprises an S button disposed on an outer surface of the charging gun, and the S button is disposed above the first button.

Optionally, the charging gun and the vehicle body assembly are each provided with a charging circuit through which power is supplied to a vehicle-mounted battery when the charging gun is attached to the vehicle body assembly.

The charging gun locking system, the vehicle body assembly and the charging gun according to the invention have the advantages of being simple in structure, easy to manufacture and convenient to install, enable a user to release locking between a vehicle and the charging gun only by operating on the charging gun side, thereby simplifying the operation and improving user experience.

### Brief Description of the Drawings

The invention will be further described in detail below in conjunction with the accompanying drawings and preferred embodiments. However, those skilled in the art would appreciate that the drawings are drawn merely for the purpose of illustrating the preferred embodiments and therefore should not be taken as limiting the scope of the invention. In addition, unless otherwise specified, the drawings are merely intended to be conceptually illustrative of the constitution or construction of the described objects and may include exaggerated representations, and the drawings are not necessarily drawn to scale.
Fig. 1 is a schematic diagram of a locked state of an embodiment of a charging gun locking system according to the invention.
Fig. 2A is a schematic diagram of the first step of unlocking of the embodiment shown in Fig. 1.
Fig. 2B is a schematic diagram of the second step of unlocking of the embodiment shown in Fig. 1.
Fig. 2C is a schematic diagram of the third step of unlocking of the embodiment shown in Fig. 1.

### Detailed Description of Embodiments

Hereinafter, preferred embodiments of the invention will be described in detail with reference to the accompanying drawings. It will be appreciated by those skilled in the art that these descriptions are merely illustrative and exemplary, and should not be construed as limiting the scope of the invention.

First of all, it should be noted that the orientation terms, such as top, bottom, upward and downward, referred to herein are defined with respect to the directions in the drawings, and they are relative concepts and can thus vary depending on different locations and different practical states. Therefore, these or other orientation terms should not be construed as limiting terms.

In addition, it should also be noted that any single technical feature described or implied in the embodiments herein, or any single technical feature shown or implied in the drawings, or their equivalents can be further combined with one another, so as to obtain other embodiments of the invention which are not directly mentioned herein.

It should be noted that in different drawings, the same reference numerals denote the same or substantially the same components.

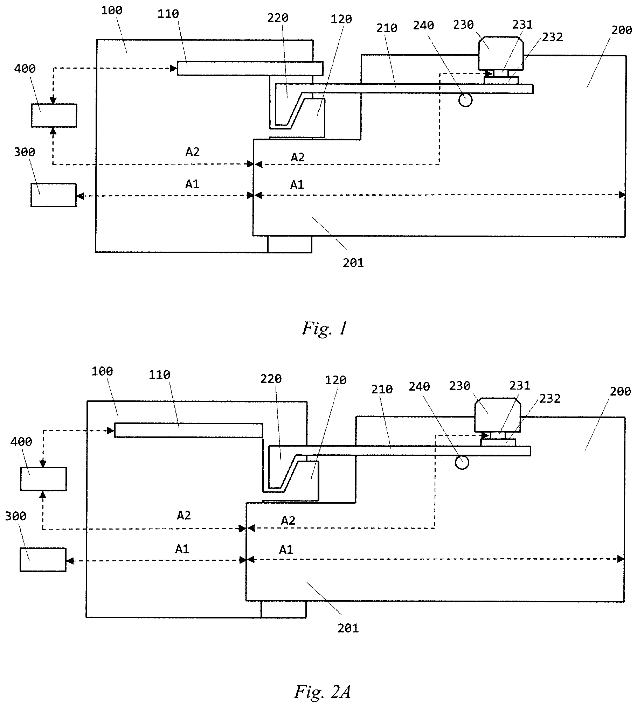

Fig. 1 is a schematic diagram of a locked state of an embodiment of a charging gun locking system according to the invention. A charging gun locking system comprises a vehicle body assembly 100 and a charging gun 200, wherein the vehicle body assembly 100 comprises: an electronic locking mechanism 110 configured to be movable relative to the vehicle body assembly 100; and a controller 400 electrically connected to the electronic locking mechanism 110 and a control circuit A2. The charging gun 200 is detachably attached to the vehicle body assembly 100 and comprises: a button assembly 230 comprising a first button 231 associated with the control circuit A2; and a mechanical locking mechanism 210 with one end provided with a mechanical locking portion 220 and the other end associated with the button assembly 230.

The electronic locking mechanism 110 is configured to have a first position in which the electronic locking mechanism 110 locks the mechanical locking portion 220 and a second position in which the electronic locking mechanism 110 unlocks the mechanical locking portion 120.

Optionally, the first button 231 is configured to emit a first signal when depressed.

Optionally, the first button 231 is configured to cut off a CC signal when depressed.

Optionally, the controller 400 is configured to: perform operator permission determination when the first signal has been sensed, and move the electronic locking mechanism 110 from the first position to the second position if it is determined that an operator has an operation permission; and keep the electronic locking mechanism 110 in the first position if it is determined that the operator does not have the operation permission.

Optionally, the controller 400 is configured to perform the operator permission determination based on: whether a vehicle key is inserted into a keyhole, whether a vehicle is locked and/or whether a wireless key is near the vehicle.

As shown in Fig. 1, the mechanical locking mechanism 210 is rotatably attached to a spindle 240, the button assembly 230 further comprises a second button 232, and the second button 232 is configured to rotate the mechanical locking mechanism 210 about the spindle 240 when pressed. The first button 231 is disposed above the second button 232, the button assembly 230 can further comprise an S button disposed on an outer surface of the charging gun, and the S button is disposed above the first button 231.

In addition, the vehicle body assembly 100 can further comprise a lock bolt 120, and the lock bolt 120 is configured to cooperate with the electronic locking mechanism 110 in the first position to lock the mechanical locking portion 220.

In some other embodiments, the vehicle body assembly may not comprise a lock bolt, and the electronic locking mechanism is configured to directly lock the mechanical locking portion.

As shown in Fig. 1, the charging gun 200 and the vehicle body assembly 100 are each provided with a charging circuit A1 through which power can be supplied to a vehicle-mounted battery 300 when the charging gun 200 is attached to the vehicle body assembly 100.

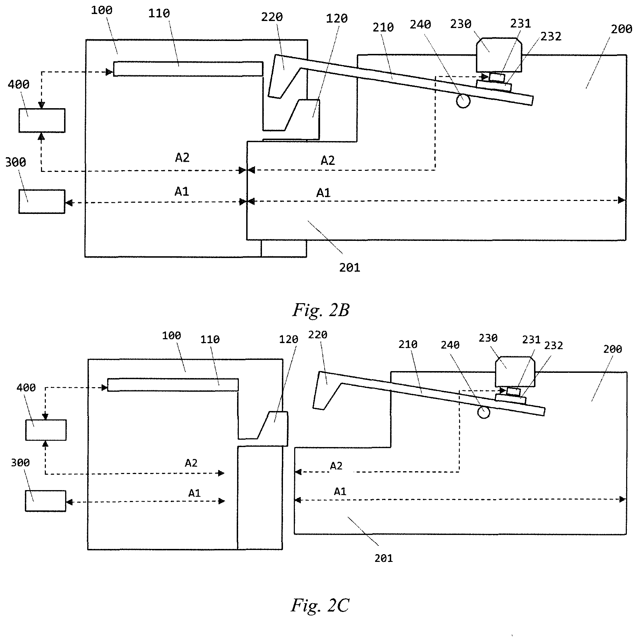

Figs. 2A-2C show steps of unlocking according to the embodiment of the invention, wherein Fig. 2A is a schematic diagram of the first step of unlocking of the embodiment shown in Fig. 1; Fig. 2B is a schematic diagram of the second step of unlocking of the embodiment shown in Fig. 1; and Fig. 2C is a schematic diagram of the third step of unlocking of the embodiment shown in Fig. 1.

As shown in Fig. 2A, when a user depresses an S button 230 on the charging gun 200, the first button 231 is depressed first, thereby emitting a first signal. Preferably, when the first button 231 is depressed, it cuts off a CC signal in the control circuit A2. After detecting that the CC signal is cut off, the controller 400 then determines whether the user has the permission to pull off the charging gun 200 according to other input signals.

Optionally, the controller 400 may determine whether the user has the permission to pull off the charging gun 200 according to one or more of the following conditions: whether a vehicle key is inserted, whether a vehicle is locked, whether a wireless key is near the vehicle, etc.

If the controller 400 determines that the user has the permission to pull off the charging gun, the electronic locking mechanism 110 is moved from the first position shown in Fig. 1 to the second position shown in Fig. 2A.

As shown in Fig. 2B, the user continues to depress the S button 230 on the charging gun 200 until the second button 232 is depressed. At this time, the right side of the mechanical locking mechanism 210 is depressed and the mechanical locking portion 220 is lifted upward, so that the locking between the mechanical locking mechanism 220 and the lock bolt 120 is released.

As shown in Fig. 2C, the user can pull out the charging gun 200 to detach the charging gun 200 from the vehicle body assembly 100. At this time, the charging gun 200 is disconnected from the charging circuit A1 on the vehicle body assembly 100, and the charging gun 200 is disconnected from the control circuit A2 on the vehicle body assembly 100.

When it is necessary to insert the charging gun 200, the user can depress the button assembly 230 to lift the mechanical locking portion 220 upward, and then insert a charging plug 201 into the vehicle body assembly 100. After the second button 232 is released, the mechanical locking portion 220 will move downward into engagement with the lock bolt 120. After the first button 231 is released, the control circuit A2 transmits a CC signal to the controller 400. The controller 400 can then move the electronic locking mechanism 110 from the second position to the first position, thereby locking the mechanical locking portion 220.

Therefore, in the case that the charging gun of the invention is adopted, the user can pull off the charging gun 200 only by depressing the button assembly on the charging gun 200 without operating at the vehicle end, thus greatly improving working efficiency and enhancing user experience.

According to the above disclosure, those skilled in the art can easily set the charging gun of the invention at a charging pile or a charging station, and set the vehicle body assembly of the invention on the vehicle.

The invention further relates to the following technical solution:
a vehicle body assembly 100 used for installing a charging gun, the vehicle body assembly 100 comprising:
   an electronic locking mechanism 110 configured to be movable relative to the vehicle body assembly 100; and
   a controller 400 electrically connected to the electronic locking mechanism 110 and a control circuit;
wherein the electronic locking mechanism 110 is configured to have a first position in which the electronic locking mechanism 110 locks the mechanical locking portion 220 of the charging gun 200 and a second position in which the electronic locking mechanism 110 unlocks the mechanical locking portion 220.

Optionally, the controller 400 is configured to: perform operator permission determination when the first signal has been sensed, and move the electronic locking mechanism 110 from the first position to the second position if it is determined that an operator has an operation permission; and keep the electronic locking mechanism 110 in the first position if it is determined that the operator does not have the operation permission.

Optionally, the controller 400 is configured to perform the operator permission determination based on: whether a vehicle key is inserted into a keyhole, whether a vehicle is locked and/or whether a wireless key is near the vehicle.

Optionally, the vehicle body assembly 100 further comprises a lock bolt 120, and the lock bolt 120 is configured to cooperate with the electronic locking mechanism 110 in the first position to lock the mechanical locking portion 220.

Optionally, the charging gun 200 and the vehicle body assembly 100 are each provided with a charging circuit A1 through which power is supplied to a vehicle-mounted battery 300 when the charging gun 200 is attached to the vehicle body assembly 100.

A charging gun 200 detachably attached to the vehicle body assembly 100 is provided, the charging gun 200 comprising:
a button assembly 230 comprising a first button 231 associated with the control circuit A2; and
a mechanical locking mechanism 210 with one end provided with a mechanical locking portion 220 and the other end associated with the button assembly 230; and
wherein the mechanical locking mechanism 210 is configured to be locked by an electronic locking mechanism 110 in the vehicle body assembly 100, and the electronic locking mechanism 110 is configured to have a first position in which the electronic locking mechanism 110 locks the mechanical locking portion 220 and a second position in which the electronic locking mechanism 110 unlocks the mechanical locking portion 220.

Optionally, the first button 231 is configured to emit a first signal when depressed.

Optionally, the first button 231 is configured to cut off a CC signal when depressed.

Optionally, the mechanical locking mechanism 210 is rotatably attached to a spindle 240, the button assembly 230 further comprises a second button 232, and the second button 232 is configured to rotate the mechanical locking mechanism 210 about the spindle 240 when depressed.

Optionally, the first button 231 is disposed above the second button 232.

Optionally, the button assembly 230 further comprises an S button disposed on an outer surface of the charging gun 200, and the S button is disposed above the first button 231.

Optionally, the charging gun 200 and the vehicle body assembly 100 are each provided with a charging circuit A1 through which power is supplied to a vehicle-mounted battery 300 when the charging gun 200 is attached to the vehicle body assembly 100.

The invention is disclosed in this description with reference to the accompanying drawings, and those skilled in the art would be able to practice the invention, including manufacturing and using any device or system, selecting suitable materials, and using any combined methods. The scope of the invention is defined by the claimed technical solutions, and includes other examples conceivable by those skilled in the art. So long as such other examples include structural elements that do not differ from the literal language of the claimed technical solutions or such other examples include equivalent structural elements which are not substantially different from the literal language of the claimed technical solutions, such other examples should be considered to be within the scope of protection as determined by the claimed technical solutions of the invention.

## Claims

1. A charging gun locking system, **characterized by** comprising:
a vehicle body assembly, comprising:
an electronic locking mechanism configured to be movable relative to the vehicle body assembly;
a controller electrically connected to the electronic locking mechanism and a control circuit; and
a charging gun detachably attached to the vehicle body assembly and comprising:
a button assembly comprising a first button associated with the control circuit, and
a mechanical locking mechanism with one end provided with a mechanical locking portion and the other end associated with the button assembly;
wherein the electronic locking mechanism is configured to have a first position in which the electronic locking mechanism locks the mechanical locking portion and a second position in which the electronic locking mechanism unlocks the mechanical locking portion.

2. The charging gun locking system according to claim 1, **characterized in that** the first button is configured to emit a first signal when depressed.

3. The charging gun locking system according to claim 2, **characterized in that** the first button is configured to cut off a CC signal when depressed.

4. The charging gun locking system according to claim 2, **characterized in that** the controller is configured to: perform operator permission determination when the first signal has been sensed, and move the electronic locking mechanism from the first position to the second position if it is determined that an operator has an operation permission; and keep the electronic locking mechanism in the first position if it is determined that the operator does not have the operation permission.

5. The charging gun locking system according to claim 4, **characterized in that** the controller is configured to perform the operator permission determination based on: whether a vehicle key is inserted into a keyhole, whether a vehicle is locked and/or whether a wireless key is near the vehicle.

6. The charging gun locking system according to claim 1, **characterized in that** the mechanical locking mechanism is rotatably attached to a spindle, and the button assembly further comprises a second button configured to rotate the mechanical locking mechanism about the spindle when depressed.

7. The charging gun locking system according to claim 6, **characterized in that** the first button is disposed above the second button.

8. The charging gun locking system according to claim 6, **characterized in that** the button assembly further comprises an S button disposed on an outer surface of the charging gun, and the S button is disposed above the first button.

9. The charging gun locking system according to any one of claims 1-8, **characterized in that** the vehicle body assembly further comprises a lock bolt configured to cooperate with the electronic locking mechanism in the first position to lock the mechanical locking portion.

10. The charging gun locking system according to any one of claims 1-8, **characterized in that** the charging gun and the vehicle body assembly are each provided with a charging circuit through which power is supplied to a vehicle-mounted battery when the charging gun is attached to the vehicle body assembly.

11. A vehicle body assembly used for installing a charging gun, **characterized by** comprising:
an electronic locking mechanism configured to be movable relative to the vehicle body assembly; and
a controller electrically connected to the electronic locking mechanism and a control circuit;
wherein the electronic locking mechanism is configured to have a first position in which the electronic locking mechanism locks the mechanical locking portion of the charging gun and a second position in which the electronic locking mechanism unlocks the mechanical locking portion.

12. The vehicle body assembly according to claim 11, **characterized in that** the controller is configured to: perform operator permission determination when the first signal has been sensed, and move the electronic locking mechanism from the first position to the second position if it is determined that an operator has an operation permission; and keep the electronic locking mechanism in the first position if it is determined that the operator does not have the operation permission.

13. The vehicle body assembly according to claim 12, **characterized in that** the controller is configured to perform the operator permission determination based on: whether a vehicle key is inserted into a keyhole, whether a vehicle is locked and/or whether a wireless key is near the vehicle.

14. The vehicle body assembly according to any one of claims 11-13, **characterized in that** the vehicle body assembly further comprises a lock bolt configured to cooperate with the electronic locking mechanism in the first position to lock the mechanical locking portion.

15. The vehicle body assembly according to any one of claims 11-13, **characterized in that** the charging gun and the vehicle body assembly are each provided with a charging circuit through which power is supplied to a vehicle-mounted battery when the charging gun is attached to the vehicle body assembly.

16. A charging gun detachably attached to a vehicle body assembly, **characterized by** comprising:
a button assembly comprising a first button associated with a control circuit; and
a mechanical locking mechanism with one end provided with a mechanical locking portion and the other end associated with the button assembly; and
wherein the mechanical locking mechanism is configured to be locked by an electronic locking mechanism in the vehicle body assembly, and the electronic locking mechanism is configured to have a first position in which the electronic locking mechanism locks the mechanical locking portion and a second position in which the electronic locking mechanism unlocks the mechanical locking portion.

17. The charging gun according to claim 16, **characterized in that** the first button is configured to emit a first signal when depressed.

18. The charging gun according to claim 17, **characterized in that** the first button is configured to cut off a CC signal when depressed.

19. The charging gun according to claim 18, **characterized in that** the mechanical locking mechanism is rotatably attached to a spindle, and the button assembly further comprises a second button configured to rotate the mechanical locking mechanism about the spindle when depressed.

20. The charging gun according to claim 19, **characterized in that** the first button is disposed above the second button.

21. The charging gun according to claim 16, **characterized in that** the button assembly further comprises an S button disposed on an outer surface of the charging gun, and the S button is disposed above the first button.

22. The charging gun according to any one of claims 16-21, **characterized in that** the charging gun and the vehicle body assembly are each provided with a charging circuit through which power is supplied to a vehicle-mounted battery when the charging gun is attached to the vehicle body assembly.
